# EUROPEAN PATENT APPLICATION

(11) **EP 4 583 346 A1**
(43) Date of publication of application: **09.07.2025**
(21) Application number: 22963783.0
(22) Date of filing: 31.10.2022
(51) Int. Cl.: H02J 3/32, H02J 15/00, H02J 7/00

(54) **BATTERY MIXED-USE SYSTEM AND CONTROL METHOD AND CONTROL APPARATUS THEREFOR, AND STORAGE MEDIUM**

(71) Applicant: Contemporary Amperex Technology (Hong Kong) Limited, Central, Hong Kong (HK)
(72) Inventor: ZUO, Xiyang, Ningde, Fujian 352100 (CN); LI, Zhonghong, Ningde, Fujian 352100 (CN); WU, Kai, Ningde, Fujian 352100 (CN); XU, Jinmei, Ningde, Fujian 352100 (CN); LUO, Guangsheng, Ningde, Fujian 352100 (CN); GAO, Jinfeng, Ningde, Fujian 352100 (CN)
(74) Representative: Ziebig Hengelhaupt Intellectual Property Attorneys Patentanwaltskanzlei PartGmbB
(86) International application number: PCT/CN2022/128783
(87) International publication number: WO 2024/092464

(57) **Abstract**

Provided are a battery mix system, a control method and a control device thereof, and a storage medium. The battery mix system includes N battery clusters, the N battery clusters being connected in parallel, N being an integer greater than 1. The method includes: obtaining an electric energy exchange capability of the N battery clusters after receiving an electric energy exchange demand sent by external electric energy exchange terminal; determining one or more target battery clusters from the N battery clusters according to the electric energy exchange demand and the electric energy exchange capability of the N battery clusters; and establishing electrical connections between the one or more target battery clusters and the external electrical energy exchange terminal for electrical energy exchange with the external electrical energy exchange terminal.

## Description

### TECHNICAL FIELD

The present disclosure relates to the technical field of battery, and more particularly, to a battery mix system, a control method and control device thereof, and a storage medium.

### BACKGROUND

For economic, energy utilization and environmental considerations, there are cases where different brands and models of battery clusters, as well as new and old battery clusters, are mixed in use. Due to the different internal resistance of different battery clusters, battery clusters will bring bias current when charging and discharging. For example high-capacity battery clusters under the influence of the low-capacity battery cannot achieve its maximum potential. Also, this will cause damage to the battery, and is not economical in practical use. In particular, the uncontrollable problem of the magnitude of the current makes the safety extremely poor, and even serious safety accidents such as explosion, bulge and leakage will occur.

Moreover, due to the material system and manufacturing process limitations, it is difficult to balance the long life and high rate charging and discharging performance for the battery, especially in the case of a large number of battery clusters connected in series and parallel. As a result, a single type of long-life batteries or a single type of high-rate charge/discharge batteries is often used throughout the system, resulting in a waste of resources.

### SUMMARY

The present disclosure aims to solve, at least to some extent, one of the technical problems in the related art. To this end, it is an object of the present disclosure to propose a battery mix system, a control method and a control device thereof, and a storage medium for mixing different types of batteries to substantially increase the production, manufacturing, and design availability of the battery mix system, and to enhance the service life and safety of the battery mix system.

In order to achieve the above object, an embodiment of the first aspect of the present disclosure proposes a method of controlling a battery mix system, the battery mix system including N battery clusters, the N battery clusters being connected in parallel, and N being an integer greater than one. The method includes: obtaining an electrical energy exchange capacity of the N battery clusters after receiving an electrical energy exchange demand sent by external electrical energy exchange terminal; determining one or more target battery clusters from the N battery clusters according to the electrical energy exchange demand and the electrical energy exchange capacity of the N battery clusters; establishing electrical connections between the one or more target battery clusters and the external electrical energy exchange terminal for electrical energy exchange with the external electrical energy exchange terminal.

In addition, the method of controlling the battery mix system of the above embodiment of the present disclosure may further have the following additional technical features.

According to an embodiment of the present disclosure, said determining the one or more target battery clusters from the N battery clusters according to the electrical energy exchange demand and the electrical energy exchange capability of the N battery clusters includes: determining whether the N battery clusters satisfy the electrical energy exchange demand according to the electrical energy exchange capability of the N battery clusters; when the N battery clusters fail to satisfy the electrical energy exchange demand, determining that the N battery clusters are all the target battery clusters; when the N battery clusters satisfy the electrical energy exchange demand, selecting all or part of the N battery clusters as the target battery clusters according to the electrical energy exchange demand and the electrical energy exchange capability of the N battery clusters.

According to an embodiment of the present disclosure, the electrical energy exchange demand includes a first electrical energy exchange power and a first electrical energy exchange time length, and the electrical energy exchange capability includes a second electrical energy exchange power and a second electrical energy exchange time length. Said determining whether the N battery clusters satisfy the electrical energy exchange demand according to the electrical energy exchange capability of the N battery clusters includes: calculating a product of the second electrical energy exchange power and the second electrical energy exchange time length of each of the N battery clusters to obtain N first products and calculating a sum value of the N first products; calculating a product of the first electrical energy exchange power and the first electrical energy exchange time length to obtain a second product and calculating a difference between the sum value and the second product; when the difference is greater than or equal to a first preset value, determining that the N battery clusters satisfy the electrical energy exchange demand, wherein the first preset value is a positive value; when the difference is smaller than the first preset value, determining that the N battery clusters fail to satisfy the electrical energy exchange demand.

According to an embodiment of the present disclosure, the sum value of the first products corresponding to all target battery clusters is greater than the second product when the N battery clusters satisfy the energy exchange demand.

According to an embodiment of the present disclosure, said establishing electrical connections between the target battery clusters and the external electrical energy exchange terminal includes: determining a start time and an end time for an electrical connection of each target battery cluster with the external electrical energy exchange terminal; establishing, according to the start time and the end time, an electrical connection between the target battery cluster and the external electrical energy exchange terminal.

According to an embodiment of the present disclosure, when the N battery clusters satisfy the electrical energy exchange demand, a difference between an earliest start time and a latest end time is equal to the first electrical energy exchange time length, and at each moment between the earliest start time and the latest end time, a total electrical energy exchange power of the target battery clusters electrically connected is equal to the first electrical energy exchange power. When the N battery clusters fail to satisfy the electrical energy exchange demand, the difference between the earliest start time and the latest end time is equal to the first electrical energy exchange time length, and in an earlier period between the earliest start time and the latest end time, the total electrical energy exchange power of the target battery clusters electrically connected is equal to the first electrical energy exchange power, and in a later period between the earliest start time and the latest end time, the total electrical energy exchange power of the target battery clusters electrically connected is smaller than the first electrical energy exchange power. When the N battery clusters fail to satisfy the first electrical energy exchange time length, the difference between the earliest start time and the latest end time is smaller than the first electrical energy exchange time length, and at each moment between the earliest start time and the latest end time, the total electrical energy exchange power of the target battery clusters is equal to the first electrical energy exchange power.

According to an embodiment of the present disclosure, a configuration of the N battery clusters includes at least one of battery cell, module, electrical box, electrical cabinet, and container. A type of the N battery clusters includes at least one of power-type battery, energy-type battery, lithium iron phosphate battery, nickel cobalt manganese battery, lithium titanate battery, lithium manganate battery, fresh state battery and aged state battery. The N battery clusters are all connected in series, all connected in parallel, or partially connected in series and partially connected in parallel.

According to an embodiment of the present disclosure, the N battery clusters include at least one energy-type battery cluster and at least one power-type battery cluster. When the N battery clusters fail to satisfy the electrical energy exchange demand, the power-type battery cluster is given priority in exchanging electrical energy with the external electrical energy exchange terminal.

According to an embodiment of the present disclosure, when the N battery clusters fail to satisfy the electrical energy exchange demand, the method further includes: sending a request for entering a quick response mode to the external electrical energy exchange terminal; after receiving a confirmation reply to the request sent by the external electrical energy exchange terminal, performing the step of determining that the N battery clusters are all the target battery clusters.

According to an embodiment of the present disclosure, when the electrical energy exchange demand includes a power-consuming demand, the electrical energy exchange capability includes a discharge capability. When the electrical energy exchange demand includes a charging demand, the electrical energy exchange capability includes a charging capability.

In order to achieve the above object, an embodiment of the second aspect of the present disclosure proposes a battery mix system. The system includes: N battery clusters, where N is an integer greater than one; N battery managers in one-to-one correspondence to the N battery clusters; N switch units in one-to-one correspondence to the N battery clusters; and a power conversion unit communicatively connected to the N battery managers. The power conversion unit is configured to: obtain from the N battery managers an electrical energy exchange capability of the N battery clusters corresponding to the N battery managers when receiving an electrical energy exchange demand sent by an external electrical energy exchange terminal; determine one or more target battery clusters from the N battery clusters according to the electrical energy exchange demand and the electrical energy exchange capability of the N battery clusters; and establish electrical connections between the one or more target battery clusters and a power-consuming terminal for electrical energy exchange with the external electrical energy exchange terminal by controlling closure of switch units corresponding to the one or more target battery clusters through corresponding battery managers.

In addition, the battery mix system of the above embodiments of the present disclosure may further have the following additional technical features.

According to an embodiment of the present disclosure, the power conversion unit is specifically configured to: determine whether the N battery clusters satisfy the electrical energy exchange demand, according to the electrical energy exchange capability of the N battery clusters; when the N battery clusters fail to satisfy the electrical energy exchange demand, determine that the N battery clusters are all the target battery clusters; when the N battery clusters satisfy the electrical energy exchange demand, select all or part of the N battery clusters as the target battery clusters according to the electrical energy exchange demand and the electrical energy exchange capability of the N battery clusters.

According to an embodiment of the present disclosure, the N battery clusters include at least one energy-type battery cluster and at least one power-type battery cluster. The power conversion unit is further configured to: when the N battery clusters fail to satisfy the electrical energy exchange demand, establish an electrical connection between the power-type battery cluster and the external electrical energy exchange terminal preferentially through the battery manager corresponding to the power-type battery cluster.

According to an embodiment of the present disclosure, the power conversion unit is further configured to: when the N battery clusters fail to satisfy the electrical energy exchange demand, send a request for entering a quick response mode to the external electrical energy exchange terminal, and after receiving a confirmation reply sent by the external electrical energy exchange terminal, determine that the N battery clusters are all the target battery clusters.

In order to achieve the above object, an embodiment of the third aspect of the present disclosure proposes a device of controlling a battery mix system. The device includes: a memory, a processor, and a computer program stored in the memory. The processor is configured to execute the computer program to implement the method of controlling the battery mix system described above.

In order to achieve the above object, an embodiment of the fourth aspect of the present disclosure proposes a non-transitory computer-readable storage medium having a computer program stored thereon. The computer program is executed by a processor to implement the method of controlling the battery mix system described above.

The battery mix system, the control method, the control device and the storage medium thereof of embodiments of the present disclosure mix different types of batteries, which substantially improves the production, manufacturing, and design availability of the battery mix system, cooperates with the deployment control strategy of the power conversion unit, taps the potential of the battery mix system to be used, reduces the cost of the system, develops the use scenarios of the battery mix system, and improves the service life and safety of the battery mix system.

### BRIEF DESCRIPTION OF DRAWINGS

FIG. 1 is a flowchart illustrating a method of controlling a battery mix system according to a first embodiment of the present disclosure;
FIG. 2 is a flowchart illustrating a method of controlling a battery mix system according to a second embodiment of the present disclosure;
FIG. 3 is a flowchart illustrating a method of controlling a battery mix system according to a third embodiment of the present disclosure;
FIG. 4 is a flowchart illustrating a method of controlling a battery mix system according to a fourth embodiment of the present disclosure;
FIG. 5 is a schematic diagram showing a structure of a battery mix system according to an embodiment of the present disclosure;
FIG. 6 is a schematic diagram showing a structure of a battery mix system according to another embodiment of the present disclosure;
FIG. 7 is a schematic diagram showing a battery cluster mixing approach according to an embodiment of the present disclosure;
FIG. 8 is a block diagram showing a structure of a device of controlling a battery mix system according to an embodiment of the present disclosure; and
FIG. 9 is a block diagram showing a structure of a non-transitory computer-readable storage medium according to an embodiment of the present disclosure.

### DETAILED DESCRIPTION

Embodiments of the present disclosure will be described in detail below, and examples of the embodiments are shown in the accompanying drawings, wherein the same or similar reference number throughout refers to the same or similar elements or elements having the same or similar function. The embodiments described below by reference to the accompanying drawings are exemplary and are intended to be used to explain the present disclosure and are not to be construed as limiting the present disclosure.

A battery mix system, a control method and a control device thereof, and a storage medium according to embodiments of the present disclosure are described below with reference to the accompanying drawings.

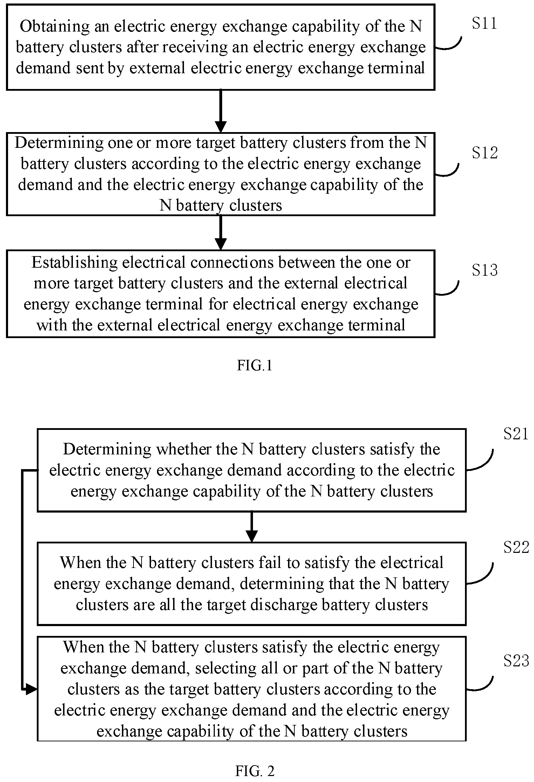

FIG. 1 is a flowchart illustrating a method of controlling a battery mix system according to a first embodiment of the present disclosure.

In an embodiment, the battery mix system includes N battery clusters, the N battery clusters being connected in parallel, and N being an integer greater than one. The method of controlling the battery mix system may be performed by the power conversion unit. FIG.1 illustrates the method of controlling the battery mix system. The method includes the following steps.

S1, obtaining an electrical energy exchange capability of the N battery clusters after receiving an electrical energy exchange demand sent by an external electrical energy exchange terminal.

Here, when the electrical energy exchange demand includes a power-consuming demand, the electrical energy exchange capability includes a discharge capability; and when the electrical energy exchange demand includes a charging demand, the electrical energy exchange capability includes a charging capability.

Specifically, the electrical energy exchange demand may include a power-consuming demand. The power-consuming terminal may be a power grid or a load. The power-consuming demand may be sent by the monitoring unit of the power grid or the load to the power conversion unit. The electrical energy exchange demand may also include a charging demand. The charging demand may be sent by the power conversion unit to the power grid monitoring unit for charging the battery clusters from the power grid. A battery manager may be provided corresponding to each one of the battery clusters. The charge and discharge capacity may be obtained from battery state information (such as charge state SOC, health state SOH, etc.) acquired by the power conversion unit from each one of the battery managers.

As an example, a correspondence between the SOC, the SOH, and the discharge capacity may be established in advance for each one of the battery clusters, and the correspondence may be stored in the power conversion unit, so that the power conversion unit, when acquiring the SOC and the SOH of the battery cluster, may look up the correspondence corresponding to the battery cluster to obtain the discharge capacity of the battery cluster.

S2, determining one or more target battery clusters from the N battery clusters according to the electrical energy exchange demand and the electrical energy exchange capability of the N battery clusters.

Specifically, the electrical energy exchange demand may include charging and power-consuming power and/or charging and power-consuming time. The electrical energy exchange capability may include charging and discharging power and/or charging and discharging time length. For example, the electrical energy exchange demand includes the power-consuming power, and the electrical energy exchange capability includes the discharging power, and the battery clusters may be permuted based on the power-consuming power and the discharging power to determine the one or more battery clusters (i.e., the one or more target battery clusters) configured to supply power to a power grid or a load. As another example, the electrical energy exchange demand includes the power-consuming time, and the electrical energy exchange capability includes the discharging time length, and the battery clusters may be permuted based on the power-consuming time and the discharging time length to determine the one or more battery clusters (i.e., the one or more target battery clusters) configured to supply power a power grid or a load. As another example, the electrical energy exchange demand includes charging power, and the electrical energy exchange capability includes charging power, and the grid power and time length can be determined based on the charging power required for each one of the battery clusters.

S3, establishing electrical connections between the one or more target battery clusters and the external electrical energy exchange terminal for electrical energy exchange with the external electrical energy exchange terminal.

Specifically, a controllable switch is connected between each battery cluster and the power grid or the load. The power conversion unit may, after determining the one or more target battery clusters and when the one or more target battery clusters are required to supply power, discharge to the power grid or the load to satisfy the power-consuming demand by controlling the closure of the controllable switch corresponding to the one or more target battery clusters through the battery manager corresponding to the one or more target battery clusters. Further, the power conversion unit may, when the one or more target battery clusters are required to be charge, connect to the power grid to satisfy the charging demand by controlling the closure of the controllable switch corresponding to the one or more target battery clusters through the battery manager corresponding to the one or more target battery clusters.

The method of controlling the battery mix system according to the embodiments of the present disclosure allows for the mixing of different types of batteries to supply power to the power-consuming terminal, substantially improving the production, manufacturing, and design availability of the battery mix system, and enhancing the service life and safety of the battery mix system.

In some embodiments, as shown in FIG. 2, determining one or more target discharge battery clusters from the N battery clusters according to the electrical energy exchange demand and the electrical energy exchange capacity of each cluster includes:

S21, determining whether the N battery clusters satisfy the electrical energy exchange demand according to the electrical energy exchange capability of the N battery clusters;

S22, when the N battery clusters fail to satisfy the electrical energy exchange demand, determining that the N battery clusters are all the target battery clusters.

It should be noted the N battery clusters satisfying the electrical energy exchange demand means that the electrical energy exchange capability of the N battery clusters is greater than the electrical energy exchange demand. For example, the discharge capacity of the N battery clusters is greater than the power-consuming demand, and the rechargeable capacity of the N battery clusters is greater than the charging demand provided by the external electrical energy exchange terminal.

S23, when the N battery clusters satisfy the electrical energy exchange demand, selecting all or part of the N battery clusters as the target battery clusters according to the electrical energy exchange demand and the electrical energy exchange capability of the N battery clusters.

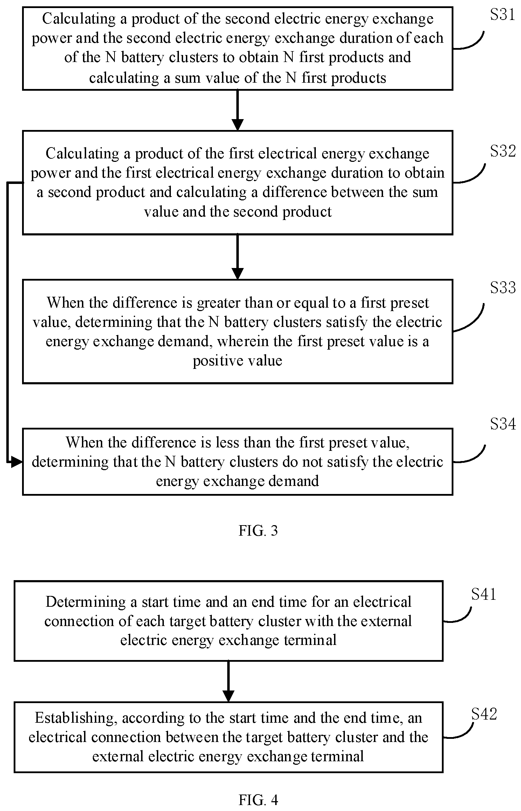

In some embodiments, as shown in FIG. 3, the electrical energy exchange demand includes a first electrical energy exchange power and a first electrical energy exchange time length, and the electrical energy exchange capability includes a second electrical energy exchange power and a second electrical energy exchange time length. The step of determining whether the N battery clusters satisfy the electrical energy exchange demand according to the electrical energy exchange capability of the N battery clusters includes:
S31, calculating a product of the second electrical energy exchange power and the second electrical energy exchange time length of each of the N battery clusters to obtain N first products and calculating a sum value of the N first products;
S32, calculating a product of the first electrical energy exchange power and the first electrical energy exchange time length to obtain a second product and calculating a difference between the sum value and the second product;
S33, when the difference is greater than or equal to a first predetermined value, determining that the N battery clusters satisfy the electrical energy exchange demand, wherein the first predetermined value is a positive value;
S34, when the difference is smaller than the first predetermined value, determining that the N battery clusters fail to satisfy the electrical energy exchange demand.

In some embodiments, the sum value of the first products corresponding to all target battery clusters is greater than the second product when the N battery clusters satisfy the electrical energy exchange demand.

In some embodiments, as shown in FIG. 4, the step of establishing electrical connections between the target battery clusters and the external electrical energy exchange terminal includes:
S41, determining a start time and an end time for an electrical connection of each target battery cluster with the external electrical energy exchange terminal;
S42, establishing, according to the start time and the second time, an electrical connection between the target battery cluster and the external electrical energy exchange terminal.

In some embodiments, when the N battery clusters satisfy the electrical energy exchange demand, a difference between an earliest start time and a latest end time is equal to the first electrical energy exchange time length, and at each moment between the earliest start time and the latest end time, a total electrical energy exchange power of the target battery clusters electrically connected is equal to the first electrical energy exchange power. Further, when the N battery clusters fail to satisfy the electrical energy exchange demand, the difference between the earliest start time and the lasted end time is equal to the first electrical energy exchange time length, and in an earlier period between the earliest start time and the latest end time, the total electrical energy exchange power of the target battery clusters electrically connected is equal to the first electrical energy exchange power, and in a later period between the earliest start time and the latest end time, the total electrical energy exchange power of the target battery clusters electrically connected is smaller than the first electrical energy exchange power. Further, when the N battery clusters fail to satisfy the first electrical energy exchange time length, the difference between the earliest start time and the lasted end time is smaller than the first electrical energy exchange time length, and at each moment between the earliest start time and the lasted end time, the total electrical energy exchange power of the target battery cluster is equal to the first electrical energy exchange power.

In some embodiments, a configuration of the N battery clusters includes at least one of battery cell, module, electrical box, electrical cabinet and container, and a type of the N battery clusters includes at least one of power-type battery, energy-type battery, lithium iron phosphate battery, nickel cobalt manganese battery, lithium titanate battery, lithium manganate battery, fresh state battery and aged state battery. The N battery clusters are all connected in series, all connected in parallel, or partially connected in series and partially connected in parallel.

In some embodiments, the N battery clusters include at least one energy-type battery cluster and at least one power-type battery cluster. When the N battery clusters fail to satisfy the electrical energy exchange demand, the power-type battery cluster is given priority in exchanging electrical energy with the external electrical energy exchange terminal.

In some embodiments, when the N battery clusters fail to satisfy the electrical energy exchange demand, the method may further include: sending a request for entering the quick response mode to the external power exchange terminal; and after receiving a confirmation reply to the request sent by the external energy exchange terminal, performing the step of determining that the N battery clusters are all the target battery clusters.

Specifically, in the case of power-consuming demand, for example, the power-consuming terminal may be powered by a plurality of power stations, each of which is provided with N battery clusters and a power conversion unit. For example, the number of power stations is two, and the two power stations are recorded as station A and station B. The power-consuming terminal first sends the power-consuming demand to the power conversion unit of station A. When the power conversion unit of station A determines that the N battery clusters of station A cannot satisfy the power-consuming demand, the power conversion unit of station A may send a request for entering a quick response mode to the power-consuming terminal. After receiving the request, the power-consuming terminal may send a power-consuming demand to the power conversion unit of station B. When the battery clusters of station B satisfy the power-consuming demand of the power-consuming terminal, the power-consuming terminal may not confirm the request sent by station A, and at this time, station A does not supply power. When the battery clusters of station B also cannot satisfy the power-consuming demand of the power-consuming terminal, the power-consuming terminal may confirm the request sent by station A, and station A will supply power.

In summary, the method of controlling the battery mix system according to an embodiment of the present disclosure mixes different types of batteries, substantially improving the production, manufacturing, and design availability of the battery mix system, and enhancing the service life and safety of the battery mix system.

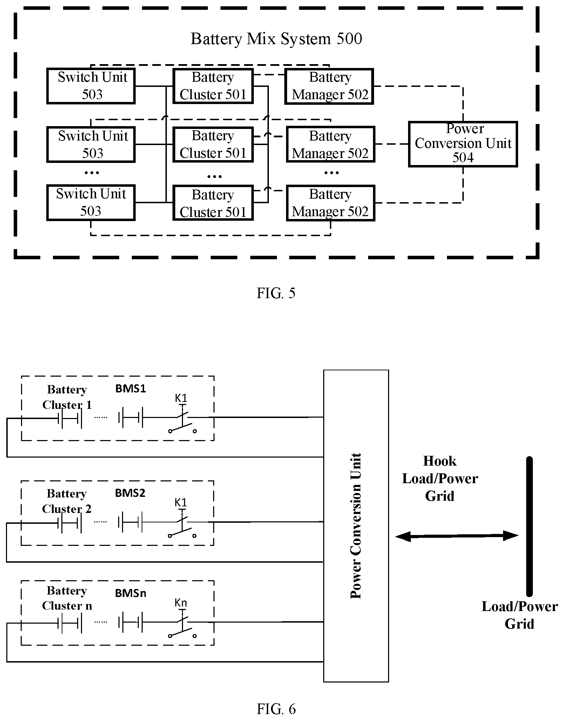

FIG. 5 is a schematic diagram showing a structure of a battery mix system according to an embodiment of the present disclosure.

The battery mix system 500 includes: N battery clusters 501, N battery managers 502, N switch units 503, and a power conversion unit 504.

Here, the N battery clusters 501 are connected in parallel. The N battery managers 502 are in one-to-one correspondence to the N battery clusters 501. The N switch units 503 are in one-to-one correspondence to the N battery clusters 501. A power conversion unit 504 is communicatively connected to the N battery managers 502. The power conversion unit 504 is configured to: obtain from the N battery managers 502 an electrical energy exchange capability of the N battery clusters corresponding to the N battery managers when receiving an electrical energy exchange demand sent by an external power exchange terminal; determine one or more target battery clusters from the N battery clusters 501 according to the electrical energy exchange demand and the electrical energy exchange capacity of the N battery clusters 501; and establish electrical connections between the one or more target battery clusters and a power-consuming terminal for electrical energy exchange with the external electrical energy exchange terminal by controlling the closure of the switch units 503 corresponding to the one or more target battery clusters through a corresponding battery manager 502.

Specifically, a connection of the battery mix system 500 is shown in FIG. 6, where each battery cluster (i.e., the battery cluster 501) is controlled by a separate BMS (i.e., the battery manager 502), and a switch device K1~Kn (i.e., the switch unit 503) is required between each of the battery clusters and the power converter unit (i.e., the power conversion unit 504). The switch device may be formed by a relay, a MOS (Metal-Oxide-Semiconductor) Field-Effect Transistor, a IGBT (Insulated Gate Bipolar Transistor), a SIC-MOS (Silicon Carbide Metal-Oxide-Semiconductor) Field Effect Transistor and other devices are connected in series and parallel. The K1~Kn are driven and controlled by the BMS or the power unit, which determines whether or not the battery clusters are accessed to the power converter unit to be adjusted and controlled by it.

The battery mix system according to the embodiments of the present disclosure mixes different types of batteries, substantially improving the production, manufacturing, and design availability of the battery mix system, cooperating with the deployment control strategy of the power conversion unit, exploiting the potential of the battery mix system for use, reducing the cost of the system, developing the use scenarios of the battery mix system, and improving the service life and safety of the battery mix system.

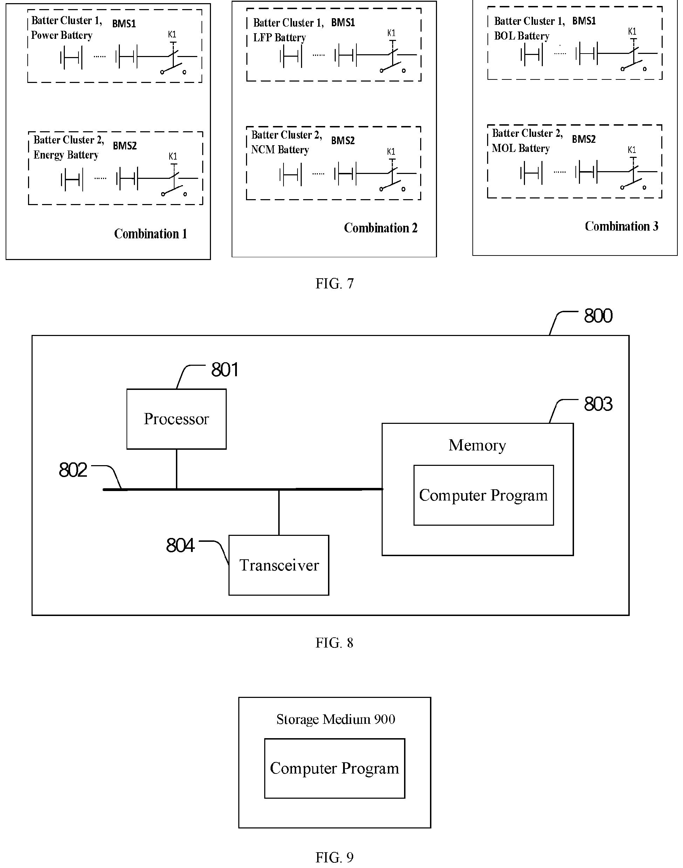

In some embodiments, the mixing of different battery clusters 501 is shown in FIG. 7.

Combination 1: Battery cluster 1 is a power-type battery, and battery cluster 2 is an energy-type battery. Here, the battery cluster includes: a battery cell, a module, an electrical box, an electrical cabinet, a container, etc. The battery clusters 1 and 2 in Combination 1 are only examples, and there can be N battery clusters. There can be no limitation on the series-parallel connection of the battery clusters 1 and 2. The N battery clusters are connected in series and parallel to form a battery cluster system.

Combination 2: Battery cluster 1 is a LFP (LiFePO4, lithium iron phosphate) battery, battery cluster 2 is a NCM (nickel-cobalt-manganese) battery. Here, the battery cluster includes: a battery cell, a module, an electrical box, an electrical cabinet, a container, etc. The battery clusters 1 and 2 in Combination 2 are only examples, and there can be N battery clusters. There can be no limitation on the series-parallel connection of the battery clusters 1 and 2. The N battery clusters may include the following battery type: LFP, NCM, lithium titanate, lithium manganate, etc. The N battery clusters are connected in series and parallel to form a battery cluster system.

Combination 3: Battery cluster 1 is a BOL battery (fresh state battery), and battery cluster 2 is a MOL battery (decay to a certain state battery, SOH (state of health, battery health) is usually > 70%). The battery cluster numbered N may also be a MOL battery. Here, the battery cluster includes: a battery cell, a module, an electrical box, an electrical cabinet, a container, etc. The battery clusters 1 and 2 in Combination 3 are only examples, and there can be N battery clusters. There can be no limitation on the series-parallel connection of the battery clusters 1 and 2. The N battery clusters are connected in series and parallel to form a battery cluster system.

The mixing of the battery clusters 501 illustrated in FIG. 7 is merely an example, and should not bring about any limitation on the functions and scope of use of the embodiments of the present disclosure.

In some embodiments, the power conversion unit 504 is configured to: determine whether the N battery clusters 501 satisfy the electrical energy exchange demand according to the electrical energy exchange capacity of the N batteries. When the N battery clusters fail to satisfy the electrical energy exchange demand, the power conversion unit is configured to determine that the N battery clusters 501 are all the target battery clusters. When the N battery clusters satisfy the electrical energy exchange demand, the power conversion unit is configured to select all or part of the N battery clusters 501 as the target battery clusters according to the electrical energy exchange demand and the power exchange capacity of the N battery clusters 501.

Specifically, the load or the power grid requests power-consuming power P_out and power-consuming time T_out from the power conversion unit 504 according to its own demand. The power conversion unit 504 requires the battery manager 502 to report the current battery state of the corresponding battery cluster 501, specify the current discharge capacity (which can be the discharge power within a certain period of time) of the N battery clusters 501, and report them to the power conversion unit 504. The power conversion unit 504 determines whether the current state of the N battery clusters 501 satisfy the demand P_out and T_out. After determining that P_out and T_out are simultaneously satisfied, the power conversion unit 504 again determines whether all the battery clusters 501 are required to participate in the discharging. After determining that all the battery clusters 501 are required to participate in the discharging, the power conversion unit 504 sends a command to enable the battery manager 502 to actuate the closure of the all switch unit 503, and all the battery clusters 501 participating in the discharging, responding to the demand of the load or the power grid. When determining that all the battery clusters 501 are not required to participate in the discharging, the power conversion unit 504 sends a command to enable part of the battery clusters 501 to participate in the discharging. Each of the battery managers 502 responds to the closing of the corresponding switch units 503, participating in the discharging.

In some embodiments, the N battery clusters 501 include at least one energy-type battery cluster 501 and at least one power-type battery cluster 501. The power conversion unit 504 is further configured to: when the N battery clusters fail to satisfy the electric energy exchange demand, establish an electrical connection between the power-type battery cluster and the external electrical energy exchange terminal preferentially through the battery manager 502 corresponding to the power-type battery cluster 501.

In some embodiments, the power conversion unit 504 is further configured to: when the N battery clusters 501 fail to satisfy the electrical energy exchange demand, send a request for entering a quick response mode to the external electrical energy exchange terminal, and after receiving a confirmation reply sent by the external electric energy exchange terminal, determine that the N battery clusters 501 are all the target battery clusters.

Specifically, after the power conversion unit 504 determines that the current state of the N battery clusters 501 cannot simultaneously satisfy P_out and T_out, the power conversion unit 504 feeds back the above information to the load or the power grid, and requests for entering the quick response mode. After obtaining a confirmation reply, the power conversion unit 504 actuates the switch unit 503 corresponding to the power-type battery clusters 501 to close, and responds with full force with quick output. Subsequently, the energy-type battery cluster 501 is turned on for output according to the demand.

In summary, the battery mix system according to the embodiments of the present disclosure mixes different types of batteries, substantially improving the production, manufacturing, and design availability of the battery mix system, cooperating with the deployment control strategy of the power conversion unit, tapping the potential of the battery mix system for use, reducing the cost of the system, developing the use scenarios of the battery mix system, and improving the service life and safety of the battery mix system.

FIG. 8 is a block diagram showing a structure of a device of controlling a battery mix system according to an embodiment of the present disclosure.

As shown in FIG. 8, the control device 800 includes: a processor 801 and a memory 803. Here, the processor 801 and the memory 803 are connected, e.g., via a bus 802. Optionally, the controller 800 may also include a transceiver 804. It should be noted that the transceiver 804 is not limited to one in practical applications. The structure of the controller 800 does not constitute a limitation on the embodiments of the present disclosure.

The processor 801 may be a CPU (Central Processing Unit), a general-purpose processor, a DSP (Digital Signal Processor), an ASIC (Application Specific Integrated Circuit), a FPGA (Field Programmable Gate Array) or other programmable logic device, transistor logic device, hardware component, or any combination thereof. It may implement or execute various exemplary logic boxes, modules, and circuits described in conjunction with the present disclosure. Processor 801 may also be a combination that implements computing functions, such as a combination including one or more microprocessor, a combination of a DSP and a microprocessor, etc.

The bus 802 may include a pathway to transfer information between the above-described components. The bus 802 may be a PCI (Peripheral Component Interconnect) bus or an EISA (Extended Industry Standard Architecture) bus, etc. Bus 802 can be categorized as an address bus, a data bus, a control bus, etc. For ease of representation, in FIG. 8, the bus is represented by only one bold line, but does not indicate that there is only one bus or one type of bus.

The memory 803 is configured to store a computer program corresponding to the method of controlling the battery mix system according to the foregoing embodiments of the present disclosure. The computer program is controlled for execution by the processor 801. The processor 801 is configured to execute the computer program stored in the memory 803 to implement the content shown in the foregoing method embodiment.

Here, the control device 800 includes, but is not limited to: mobile terminals such as a mobile phone, a laptop computer, a digital broadcast receiver, a PDA (Personal Digital Assistant), a PAD (tablet computer), a PMP (Portable Multimedia Player), an in-vehicle terminal (e.g., a vehicle navigation terminal), and the like, as well as fixed terminals such as a digital TV, a desktop computer, and the like. The control device 800 illustrated in FIG. 8 is merely an example and should not impose any limitation on the functions and scope of use of the embodiments of the present disclosure.

FIG. 9 is a block diagram showing a structure of a non-transitory computer-readable storage medium according to an embodiment of the present disclosure.

As shown in FIG. 9, the storage medium 800 has a computer program stored thereon. The computer program is executed by the processor 801 to implement the method of controlling the battery mix system described above.

The non-transitory computer-readable storage medium according to the embodiments of the present disclosure, by implementing the method of controlling the battery mix system, mixes different types of batteries, substantially improving the production, manufacturing, and design usability of the battery mix system, cooperating with the deployment control strategy of the power conversion unit, tapping the potential of the battery mix system, reducing the cost of the system, developing the use scenarios of the battery mix system, and enhancing the service life and safety of the battery mix system.

It is noted that the logic and/or steps represented in the flowchart or otherwise described herein, for example, may be considered a sequential list of executable instructions for implementing the logic functions, and may be specifically implemented in any computer-readable medium for use by or in combination with instruction execution systems, devices, or apparatus (e.g., computer-based systems, systems including processors, or other systems that can fetch instructions and execute the instructions from the instruction execution systems, devices, or apparatus). For the purposes of this specification, "a computer-readable medium" may be any device that may contain, store, communicate, disseminate, or transmit a program for use by or in conjunction with an instruction execution system, device, or apparatus. More specific examples of computer-readable media (a non-exhaustive list) include the following: an electrically connected portion (electronic device) with one or more wiring, a portable computer disk cartridge (magnetic device), a random-access memory (RAM), a read-only memory (ROM), an erasable read-only memory (EPROM or flash memory), a fiber optic device, and a portable compact disc read-only memory (CDROM). Alternatively, the computer-readable medium may even be paper or other suitable medium on which the program may be printed, since the program may be obtained electronically, for example, by optically scanning the paper or other medium, followed by editing, decoding, or, if necessary, processing in other suitable ways, and then storing it in a computer memory.

It should be understood that various portions of the present disclosure may be implemented with hardware, software, firmware, or combinations thereof. In the embodiments described above, a plurality of steps or methods may be implemented with software or firmware stored in memory and executed by a suitable instruction execution system. For example, if implemented in hardware, as in another embodiment, it may be implemented with any of the following techniques known in the art, or combinations thereof: discrete logic circuits having logic gates for implementing logic functions on data signals, special-purpose integrated circuits having suitable combinational logic gates, programmable gate arrays (PGAs), field programmable gate arrays (FPGAs), and the like.

In the description of this specification, the description with reference to the terms "an embodiment", "some embodiments", "example", "specific example", or "some examples", etc. means that a specific feature, structure, material, or characteristic described in conjunction with the embodiment or example is included in at least one embodiment or example of the present disclosure. In this specification, schematic expressions of the above terms do not necessarily refer to the same embodiment or example. Moreover, the specific feature, structure, material, or characteristic described may be combined in any one or more embodiments or examples in a suitable manner.

In the description of the present disclosure, it is to be understood that the terms "center", "longitudinal", "transverse", "length ", "width", "thickness", "above", "below", "front", "back", "left", "right", "vertical", "horizontal", "top", "bottom", "inside", "outside", "clockwise", "counterclockwise", "axial", "radial", "circumferential", etc. indicate orientation or positional relationships based on those shown in the accompanying drawings. The above terms are intended only to facilitate the description of the present disclosure and to simplify the description, and are not intended to indicate or imply that the device or element referred to must have a particular orientation, be constructed and operated in a particular orientation. Therefore, it cannot be construed as a limitation of the present disclosure.

Furthermore, the terms "first" and "second" are used for descriptive purposes only and are not to be construed as indicating or implying relative importance or implicitly specifying the number of technical features indicated. Thus, a feature defined with the terms "first", "second" may expressly or impliedly include at least one such feature. In the description of the present disclosure, "plurality" means at least two, e.g., two, three, etc., unless otherwise expressly and specifically limited.

In the present disclosure, unless otherwise expressly specified and limited, the terms "mounting", "connecting", "connecting", "fixing", etc. shall be broadly construed. For example, it can be a fixed connection, a removable connection, or a one-piece connection; it can be a mechanical connection or an electrical connection; it can be a direct connection or an indirect connection through an intermediate medium, and it can be a connectivity within the two elements or an interaction between the two elements, unless otherwise expressly limited. For those of ordinary skill in the art, the specific meaning of the above terms in the present disclosure may be understood on a case-by-case basis.

In the present disclosure, unless otherwise expressly specified and limited, the first feature "over" or "under" the second feature may be a direct contact between the first and second features, or an indirect contact between the first and second features through an intermediate medium. Furthermore, the first feature being "above" the second feature may be that the first feature is directly above or diagonally above the second feature, or simply that the first feature is horizontally higher than the second feature. The first feature is "below" the second feature may be that the first feature is directly below or diagonally below the second feature, or simply that the first feature is less horizontal than the second feature.

Although embodiments of the present disclosure have been shown and described above, it is understood that the above embodiments are exemplary and are not to be construed as a limitation of the present disclosure, and that a person of ordinary skill in the art may make changes, modifications, substitutions, and variations to the above embodiments within the scope of the present disclosure.

## Claims

1. A method of controlling a battery mix system, the battery mix system comprising N battery clusters, N being an integer greater than one, the method comprising:
obtaining an electrical energy exchange capability of the N battery clusters after receiving an electrical energy exchange demand sent by an external electrical energy exchange terminal;
determining one or more target battery clusters from the N battery clusters according to the electrical energy exchange demand and the electrical energy exchange capability of the N battery clusters;
establishing electrical connections between the one or more target battery clusters and the external electrical energy exchange terminal for electrical energy exchange with the external electrical energy exchange terminal.

2. The method of claim 1, wherein said determining the one or more target battery clusters from the N battery clusters according to the electrical energy exchange demand and the electrical energy exchange capability of the N battery clusters comprises:
determining whether the N battery clusters satisfy the electrical energy exchange demand according to the electrical energy exchange capability of the N battery clusters;
when the N battery clusters fail to satisfy the electrical energy exchange demand, determining that the N battery clusters are all the target battery clusters; and
when the N battery clusters satisfy the electrical energy exchange demand, selecting all or part of the N battery clusters as the target battery clusters according to the electrical energy exchange demand and the electrical energy exchange capability of the N battery clusters.

3. The method of claim 2, wherein the electrical energy exchange demand comprises a first electrical energy exchange power and a first electrical energy exchange time length, the electrical energy exchange capability comprises a second electrical energy exchange power and a second electrical energy exchange time length, and said determining whether the N battery clusters satisfy the electrical energy exchange demand according to the electrical energy exchange capability of the N battery clusters comprises:
calculating a product of the second electrical energy exchange power and the second electrical energy exchange time length of each of the N battery clusters to obtain N first products and calculating a sum value of the N first products;
calculating a product of the first electrical energy exchange power and the first electrical energy exchange time length to obtain a second product and calculating a difference between the sum value and the second product;
when the difference is greater than or equal to a first preset value, determining that the N battery clusters satisfy the electrical energy exchange demand, wherein the first preset value is a positive value; and
when the difference is smaller than the first preset value, determining that the N battery clusters fail to satisfy the electrical energy exchange demand.

4. The method of claim 3, wherein the sum value of the first products corresponding to all target battery clusters is greater than the second product when the N battery clusters satisfy the energy exchange demand.

5. The method of claim 3, wherein said establishing electrical connections between the target battery clusters and the external electrical energy exchange terminal comprises:
determining a start time and an end time for an electrical connection of each target battery cluster with the external electrical energy exchange terminal; and
establishing, according to the start time and the end time, an electrical connection between the target battery cluster and the external electrical energy exchange terminal.

6. The method of claim 4, wherein,
when the N battery clusters satisfy the electrical energy exchange demand, a difference between an earliest start time and a latest end time is equal to the first electrical energy exchange time length, and at each moment between the earliest start time and the latest end time, a total electrical energy exchange power of the target battery clusters electrically connected is equal to the first electrical energy exchange power;
when the N battery clusters fail to satisfy the electrical energy exchange demand, the difference between the earliest start time and the latest end time is equal to the first electrical energy exchange time length, and in an earlier period between the earliest start time and the latest end time, the total electrical energy exchange power of the target battery clusters electrically connected is equal to the first electrical energy exchange power, and in a later period between the earliest start time and the latest end time, the total electrical energy exchange power of the target battery clusters electrically connected is smaller than the first electrical energy exchange power;
when the N battery clusters fail to satisfy the first electrical energy exchange time length, the difference between the earliest start time and the latest end time is smaller than the first electrical energy exchange time length, and at each moment between the earliest start time and the latest end time, the total electrical energy exchange power of the target battery clusters is equal to the first electrical energy exchange power.

7. The method of claim 2, wherein a configuration of the N battery clusters comprises at least one of a battery cell, a module, an electrical box, an electrical cabinet, and a container, wherein a type of the N battery clusters comprises at least one of a power-type battery, an energy-type battery, a lithium iron phosphate battery, a nickel cobalt manganese battery, a lithium titanate battery, a lithium manganate battery, a fresh state battery and an aged state battery, and wherein the N battery clusters are all connected in series, all connected in parallel, or partially connected in series and partially connected in parallel.

8. The method of claim 7, wherein the N battery clusters comprise at least one energy-type battery cluster and at least one power-type battery cluster, and wherein when the N battery clusters fail to satisfy the electrical energy exchange demand, the power-type battery cluster is given priority in exchanging electrical energy with the external electrical energy exchange terminal.

9. The method of claim 1, wherein when the N battery clusters fail to satisfy the electrical energy exchange demand, the method further comprises:
sending to the external electrical energy exchange terminal a request for entering a quick response mode; and
after receiving a confirmation reply to the request sent by the external electrical energy exchange terminal, performing the step of determining that the N battery clusters are all the target battery clusters.

10. The method of claim 1, wherein,
when the electrical energy exchange demand comprises a power-consuming demand, the electrical energy exchange capability comprises a discharging capability; and
when the electrical energy exchange demand comprises a charging demand, the electrical energy exchange capability comprises a charging capability.

11. A battery mix system, comprising:
N battery clusters, where N is an integer greater than 1;
N battery managers having a one-to-one correspondence with the N battery clusters;
N switch units having a one-to-one correspondence with the N battery clusters; and
a power conversion unit communicatively connected to the N battery managers, and configured to: obtain from the N battery managers an electrical energy exchange capability of the N battery clusters corresponding to the N battery managers when receiving an electrical energy exchange demand sent by an external electrical energy exchange terminal; determine one or more target battery clusters from the N battery clusters according to the electrical energy exchange demand and the electrical energy exchange capability of the N battery clusters; and establish electrical connections between the one or more target battery clusters and a power-consuming terminal for electrical energy exchange with the external electrical energy exchange terminal, by controlling closure of switch units corresponding to the one or more target battery clusters through corresponding battery managers.

12. The system of claim 11, wherein the power conversion unit is configured to:
determine whether the N battery clusters satisfy the electrical energy exchange demand, according to the electrical energy exchange capability of the N battery clusters;
when the N battery clusters fail to satisfy the electrical energy exchange demand, determine that the N battery clusters are all the target battery clusters; and
when the N battery clusters satisfy the electrical energy exchange demand, select all or part of the N battery clusters as the target battery clusters according to the electrical energy exchange demand and the electrical energy exchange capability of the N battery clusters.

13. The system of claim 12, wherein the N battery clusters comprise at least one energy-type battery cluster and at least one power-type battery cluster, and the power conversion unit is further configured to:
when the N battery clusters fail to satisfy the electrical energy exchange demand, establish an electrical connection between the power-type battery cluster and the external electrical energy exchange terminal preferentially through the battery manager corresponding to the power-type battery cluster.

14. The system of claim 13, wherein the power conversion unit is further configured to:
when the N battery clusters fail to satisfy the electrical energy exchange demand, send to the external electrical energy exchange terminal a request for entering a quick response mode, and after receiving a confirmation reply sent by the external electrical energy exchange terminal, determine that the N battery clusters are all the target battery clusters.

15. A device of controlling a battery mix system, comprising a memory, a processor, and a computer program stored in the memory, wherein the processor is configured to execute the computer program to implement the method according to any one of claims 1-10.

16. A non-transitory computer-readable storage medium, having a computer program stored thereon, wherein the computer program is executed by a processor to implement the method according to any one of claims 1-10.
